## Europäisches Patentamt

## European Patent Office

## Office européen des brevets

(19)

(11) Veröffentlichungsnummer: **0 088 214**
**B1**

(12) # EUROPÄISCHE PATENTSCHRIFT

(45) Veröffentlichungstag der Patentschrift:
26.11.86

(51) Int. Cl.⁴: **A 01 D 78/10,** A 01 D 80/00

(21) Anmeldenummer: **83100625.9**

(22) Anmeldetag: **25.01.83**

(54) **Mehrzweck-Heuwerbungsmaschine zum Schwaden, Wenden und Zetten.**

(30) Priorität: **05.03.82 CH 1354/82**

(43) Veröffentlichungstag der Anmeldung:
**14.09.83 Patentblatt 83/37**

(45) Bekanntmachung des Hinweises auf die Patenterteilung:
**26.11.86 Patentblatt 86/48**

(84) Benannte Vertragsstaaten:
**AT DE FR GB NL**

(56) Entgegenhaltungen:
**AT-B-180 434**
**CH-A-418 039**
**DE-A-2 843 775**
**DE-B-2 423 938**
**DE-U-1 948 960**
**GB-A-1 490 845**
**GB-A-2 065 435**
**GB-A-2 065 436**

(73) Patentinhaber: **BUCHER- GUYER AG**
**Maschinenfabrik, CH- 8166 Niederweningen/Zürich
(CH)**

(72) Erfinder: **Amstutz, Jean- Pierre, Dipl. Ing.,
Bachtalenstrasse 398, CH- 5242 Birr (CH)**

Anmerkung: Innerhalb von neun Monaten nach der Bekanntmachung des Hinweises auf die Erteilung des europäischen Patents i
Europäischen Patentblatt kann jedermann beim Europäischen Patentamt gegen das erteilte europäische Patent Einspruch einlege
Der Einspruch ist schriftlich einzureichen und zu begründen. Er gilt erst als eingelegt, wenn die Einspruchsgebühr entrichtet word
ist (Art. 99(1) Europäisches Patentübereinkommen).

## Beschreibung

Die Erfindung betrifft eine Heuwerbungsmaschine zum Schwadenziehen, Wenden und Zetten von geschnittenem Halmgut, mit zwei um stehende Achsen gegenläufig rotierend antreibbaren Rechkörpern, die an ihrer Unterseite ein zum Boden hin gerichtetes, elastisch verformbares Aufnahme- bzw. Transportorgan für das Halmgut aufweisen und die mit jeweils einem über den Aufnahme- bzw. Transportorganen angeordneten, mit nach unten in den Wirkungsbereich der Aufnahme- bzw. Transportorgane sich erstreckenden, Förderzinken aufweisenden, rotierend antreibbaren Werkzeugträger versehen sind, wobei die durch die freien Enden der umlaufenden Förderzinken gebildeten Rechkreise sich zwischen den Rechkörpern schneiden.

Eine solche Maschine ist durch die GB-A 2'065'436 bekanntgeworden, bei der als besonderes Merkmal - wie oben beschrieben - zinkenlose Aufnahme- und Förderorgane vorgesehen sind.

Das Schwadenziehen erfolgt mit der Einrichtung nach der genannten Druckschrift bei Verwendung von zwei gegenläufig oder gleichsinnig rotierenden Rechkörpern relativ problemlos, hingegen wird das Zetten des auf dem Boden liegenden Futters nicht wunschgemäss bzw. nicht wie mit den klassischen Kreiselheuern erreicht.

Mehrzweckmaschinen dieser Art sind mit dem Nachteil behaftet, dass das Futter beim Zettvorgang nicht genügend hoch und deshalb nicht hinreichend locker und ausgebreitet auf dem Boden abgelegt werden kann.

Insbesondere wird der Breitstreu-Effekt von Kreiselheuern deshalb nicht erreicht, weil das Futter nicht wie beim Kreiselheuer unter Formschluss mit den Zinken erfasst, sondern unter Schlupfwirkung mit einer geringeren Geschwindigkeit transportiert wird.

Aufgabe der Erfindung ist es deshalb, eine Heuwerbungsmaschine nach der eingangs beschriebenen Art zu schaffen, mit welcher bei einer schonenderen Futterbehandlung die oben erwähnten Mängel weitgehend behoben werden.

Erfindungsgemäss wird diese Aufgabe dadurch gelöst, dass die die Förderzinken aufweisenden Werkzeugträger von den Aufnahme- bzw. Transportorganen getrennt und mit einer grosseren Drehzahl als letztere antreibbar sind.

Merkmale und Einzelheiten sowie die Vorteile der Erfindung ergeben sich aus der anschliessenden Beschreibung und der Zeichnung, auf die bezüglich aller nicht im Text beschriebenen Einzelheiten verwiesen wird. Es zeigen:

Fig. 1 eine Ansicht der erfindungsgemässen Heuwerbungsmaschine mit zwei Rechorganen gemäss Pfeil A in Fig. 2,

Fig. 2 einen Längsschnitt durch die Heuwerbungsmaschine in Fig. 1,

Fig. 3 eine Variante zu Fig. 2,

Fig. 4 eine Variante zu Fig. 2 und 3,

Fig. 5 einen Längsschnitt durch die Heuwerbungsmaschine als alternative Ausgestaltung und

Fig. 6 einen Längsschnitt durch die Heuwerbungsmaschine in einer alternativen Ausführungsform.

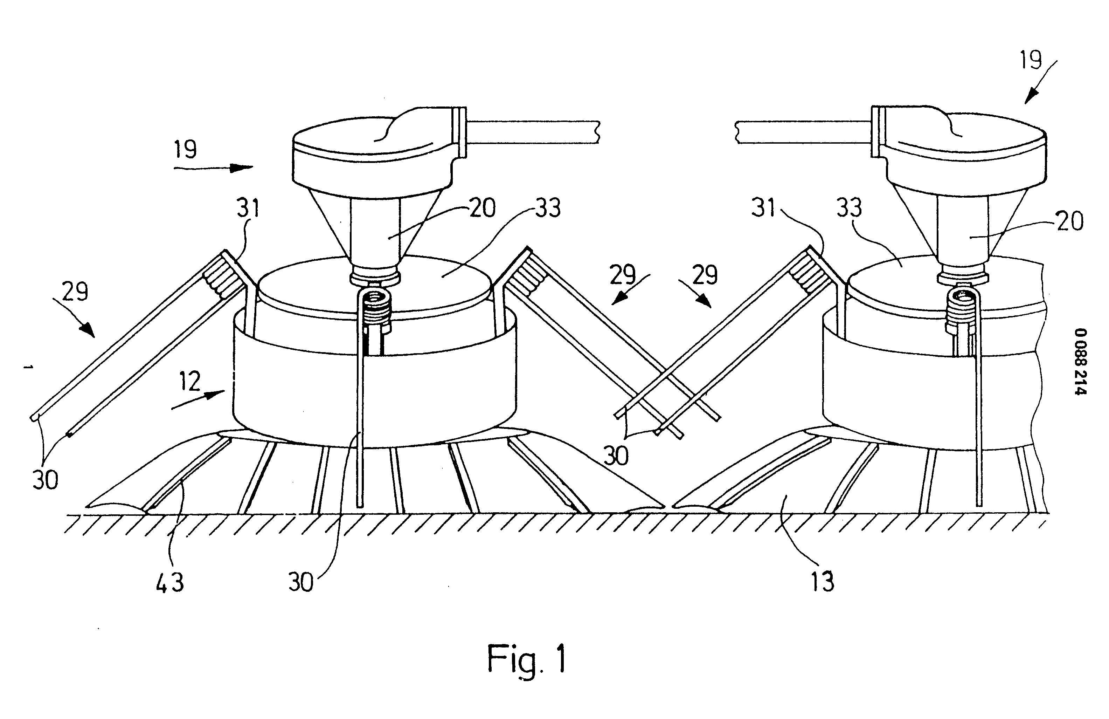

In Fig. 1 ist eine mit zwei gegenläufig rotierenden Rechkörpern versehene Heuwerbungsmaschine 11 dargestellt, die am unteren Ende des um zwei annähernd vertikale Achsen rotierenden Werkzeugträgers 12 ein mit Ausbuchtungen versehenes, nach aussen ringförmig abstehendes Aufnahme- bzw. Transportorgan 13 aus elastisch verformbarem Material, z.B. Gummi und/oder Kunststoff, aufweist. Diese Ringkragen 13 sind an einem nach unten schüsselförmig ausgewölbten Stützorgan oder einem Stützrad befestigt, wie dies bei den bekannten Heuwerbungsmaschinen üblich ist.

Der Rotationsantrieb des Werkzeugträgers 12 bzw. des Aufnahme- bzw. Transportorgans 13 erfolgt über Antriebswelle 15. Die Welle 15 lagert auf ihrer Antriebsseite im stationären Maschinengestell 18 der Heuwerbungsmaschine 11. Ihre Lagerung befindet sich im Hals 20 des das Winkelgetriebe 46,47 aufnehmenden Antriebsgehäuses 19, das mit dem Maschinengestell 18 verbunden ist und einen Gehäusedeckel 22 aufweist. Der Gehäusedeckel 22 besitzt eine wulstartige Verstärkung 23, die mit der Wand 24 des Gehäuses 19 die Lagerung des treibenden Kegelrades (nicht erkennbar) aufnimmt. Dieses Kegelrad bildet das Ende einer mit der Gelenkwelle der Zugmaschine antriebsverbundenen Zwischenwelle dieser mit mehreren rotierenden Rechorganen versehenen Heuwerbungsmaschine.

Die Lagerung der Antriebswelle 15 im Hals 20 des Antriebsgehäuses 19 wird durch die Wälzlager 26 übernommen. Bei Anordnung einer Dichtung über dem oberen Wälzlager könnte das Antriebsgehäuse mit einem flüssigen Schmiermittel gefüllt werden, wodurch eine Minderung des Verschleisses am Getriebe erreicht werden kann.

In dieser Darstellung ist auch das Zusammenwirken der gegenläufig rotierenden Ringkragen 13 und der ineinandergreifenden Förderzinken 29 erkennbar.

Mit dieser Anordnung ist es möglich, auch bei gleichsinniger Drehrichtung der Werkzeugträger 12, - wobei der von vorne gesehen rechts liegende Werkzeugträger gegenüber dem anderen leicht zurückversetzt ist -, eine seitliche Schwad bilden. Dazu wäre einem der beiden Rechorgane ein Umsteuergetriebe zuzuordnen. Mit einer besonderen Einrichtung am Verbindungsträger beider Rechorgane wäre es möglich, den Abstand zwischen den Rechorganen verstellbar auszubilden.

Damit sich während der Arbeit, insbesondere beim Schwaden an der Aussenwand des Werkzeugträgers 12 kein Futter ansammelt, sind vorteilhaft Räumstäbe 28 vorgesehen, die sich radial nach aussen und entgegen der Drehrichtung des Werkzeugträgers 12 erstrecken. Zur Erreichung des Zetteffektes bei diesen Maschinen, wobei dann mindestens zwei Rechräder gegenläufig rotieren, stehen die Förderzinken 29 am Werkzeugträger 12 in annähernd radialer Richtung nach aussen ab, derart, dass sich ihre Wirkdurchmesser in der Zone der grössten Annäherung der Rechorgane schneiden.

Ihre grösste Annäherung erreichen die Rechorgane dann, wenn sich ihre Ringkragen 13 berühren.

Vorteilhaft sind diese Förderzinken 29 aus mindestens zwei Einzelzinken 30 gebildet und nachgiebig am Werkzeugträger 12 gehaltert. Mit dieser Ausbildung wird eine optimale Zettwirkung erzielt und die Zinken werden vor übermässigem Verschleiss verschont.

Zweckmässigerweise werden Doppelzinkenpaare verwendet, wie sie bei den bekannten Kreiselheuern vorgesehen sind. In ihrer Länge sind die Förderzinken 29 mit gleicher Länge ausgebildet oder ihre Einzelzinken 30 weisen eine unterschiedliche Länge auf.

Eine optimale Zettwirkung wird nämlich dann erreicht, wenn sich die Zinkenpaare 30 im Bereich ihrer grössten Annäherung überschneiden. Die Spitzen der Förderzinken 29 berühren den Boden nicht, sondern die untersten Einzelzinken 30 weisen in Arbeitsstellung einen vertikalen Abstand zum Aufnahme- bzw. Transportorgan 13 auf. D.h. das von diesem aufgenommene Halmgut bzw. Futter wird bei gegenläufiger Drehrichtung der Werkzeugträger 12 an die Förderzinken 29 übergeben, welche beim Auseinanderdrehen das Futter über die Arbeitsbreite der Maschine hinaus breitstreuen. Das Zusammenwirken von Ringkragen 13 und Förderzinken 29 ermöglicht einen optimalen Futtertransport vom Boden aus, eine schonendere Behandlung und geringere Verschmutzung als wie sie bisher mit Kreiselheuern erzielt werden kann.

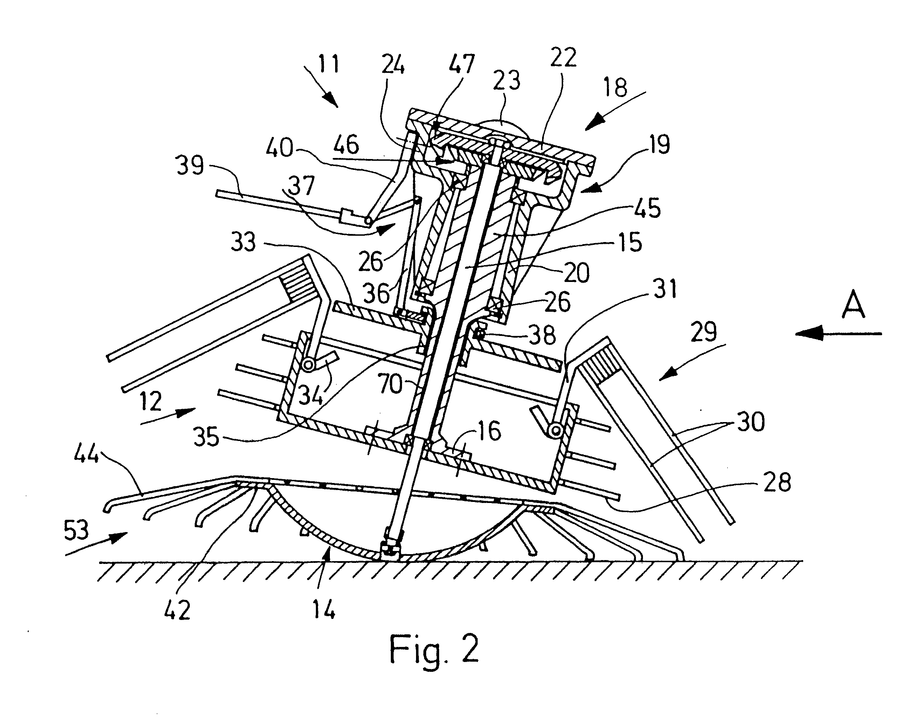

Zur Optimierung der verschiedenen Funktionen sind die Förderzinken 29 schwenkbar am Werkzeugträger 12 angeordnet. Dabei sind sie an einem Zinkenträger 31 angeschraubt oder festgeklemmt, der scharnierend (nicht ersichtlich) am Werkzeugträger 12 bzw. dessen Wand befestigt ist. Die Zinkenträger 31 sind an der Innenwand 24 des Werkzeugträgers 12 befestigt und mit einem Knick versehen, so, dass die Förderzinken 29 in Betriebsstellung eine nach unten gerichtete Schräglage einnehmen. Durch Zentrifugalkraftwirkung werden bei Rotation der Werkzeugträger 12 die Förderzinken 29 in ihre Arbeitslage gemäss Fig. 1 geschwenkt. Das Zurückschwenken der Förderzinken 29 in die Ausserbetriebsstellung erfolgt mittels eines in Parallelrichtung zur Drehachse verschiebbaren Tellers, der auf der Antriebswelle 15 gelagert ist und auf einen mit dem Zinkenträger 31 fest verbundenen Hebel 34 (Fig. 2) einwirkt.

Der Teller 33 ist mit einer Verschiebehülse 35 versehen, an deren oberem Ende eine Stange 36 eines Hebelgetriebes 37 über einen Stellring 38 angreift. Als Betätigungsorgan dient ein geknickter Doppelhebel 39, der an einem am Antriebsgehäuse 19 befestigten Support 40 schwenkbar lagert. Beim Schwaden werden durch Anheben des Doppelhebels 39 die zum Zetten verwendeten Förderzinken 29 aus ihrem Arbeitsbereich in die Ruhelage geschwenkt, sodass sie wirkungslos schräg nach oben von der Nabe 16 nach aussen abstehen.

Sobald die Förderzinken 29 zum Zetten gebraucht werden, wird der Teller 33 von seiner unteren Arretierungslage nach oben gezogen, worauf die Förderzinken 29 durch ihr Eigengewicht oder die spätere Einwirkung der Zentrifugalkraft in die Arbeitslage versetzt werden (siehe auch Fig. 2).

Es ist vorgesehen, dass beim Zetten die Rechorgane mit den sich in Arbeitsstellung befindenden Förderzinken 29 eine höhere Drehzahl aufweisen als beim Schwaden.

Es wäre möglich, den Werkzeugträger 12 auch ohne trommelförmige Wand zu verwenden, wobei dann die Befestigungsorgane der Förderzinken 29 am scheibenähnlichen Werkzeugträger anzuordnen sind.

Es könnte zum Schwadenziehen auch nur ein Rechkörper benutzt werden, dem seitlich mit Abstand ein Fangorgan zugeordnet ist, wobei dann das Zetten des Futters in Form von Breitstreuen durch die Förderzinken 29 mit nur einem Werkzeugträger 12 erfolgen kann.

Gemäss Fig. 2 ist an Stelle eines jupeähnlichen Ringkragens 13 ein mit abstehenden Rechzinken 44 versehenes Rechrad 53 taumelnd am unteren Ende der Antriebswelle 15 angebracht. Die federnd ausgebildeten Rechzinken 44 sind am Ringflansch 42 des nach oben als offene Schüssel ausgebildeten Stützorgans 14 befestigt und an ihrem äusseren Ende vorteilhaft mit zum Boden gerichteten abgekröpften Enden versehen, wodurch ihre Förderwirkung begünstigt wird. Durch die leicht schräggestellte Drehachse der Werkzeugträger 12 legen sich die vorderen Rechzinken 44 am Boden an, sodass das geschnittene Futter in den Bereich der Förderzinken 29 angehoben wird.

Um eine bessere Zettwirkung erzielen zu können, ist der Werkzeugträger 12 mit einem separaten Antrieb ausgerüstet.

Das anfallende Futter kann durch die schneller rotierenden Förderzinken 29 einer intensiveren Zettwirkung als bisher ausgesetzt werden, d.h. Verfilzungen im Futter werden weitgehend aufgehoben.

Der Aufbau dieser Maschinen verlangt aufgrund seines Antriebskonzeptes eine Hohlachse 45 zur Durchführung der Antriebswelle 15. Diese Hohlachse 45 ist im Antriebsgehäuse 19 der Maschine drehgelagert und wird von einem ersten Winkelgetriebe 46 angetrieben. Am halsähnlichen Schaft 70, der mit dem Werkzeugträger 12 verbunden ist, sitzt die Verschiebehülse 35 des anheb- und absenkbaren Tellers 33. Der separate Antrieb des Stützorgans 14 bzw. der Rechzinken 44 erfolgt über eine durch die Hohlachse 45 geführte und in dieser gelagerten Antriebswelle 15, die durch ein zweites Winkelgetriebe 47 angetrieben ist.

Vorzugsweise rotieren beim Zetten die am Stützorgan 14 befestigten Rechzinken 44 mit einer geringeren Drehzahl als die Werkzeugträger 12. Beim Schwaden sind die Zinkenträger 31 zurückgeschwenkt und die Werkzeugträger 12 drehen praktisch wirkungslos mit oder können freilaufend ausgeschaltet oder festgestellt werden.

Durch die erzeugbaren Relativgeschwindigkeiten zwischen den Werkzeugträgern 12, kann auch ein Konditioniereffekt auf das Futter ausgeübt werden.

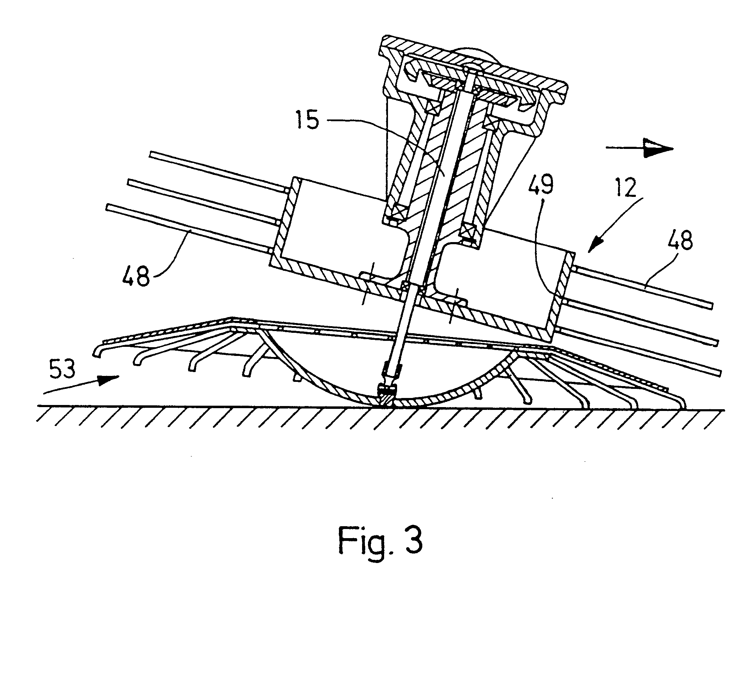

In Fig. 3 ist eine vereinfachte Ausführungsform des Werkzeugträgers der Heuwerbungsmaschine 11 nach Fig. 2 gezeigt.

Anstelle der ausser Wirkung bringbaren Förderzinken 29 sind einzelne starre Zinken 48 am Werkzeugträger 12 abstehend befestigt. Diese Zinken 48 können wahlweise am Umfang des Werkzeugträgerringes 49 versetzt oder geordnet in Reihen befestigt sein.

Sie können gleich lang oder wie veranschaulicht mit unterschiedlichen Längen zur Verbesserung ihres gegenseitigen Eingriffs vorkommen.

Zum Schwadenziehen mit einem Rechrad und seitlichem Fangorgan wird die Antriebswelle 15 vorteilhaft in eine annähernd vertikale Lage zurückgeschwenkt. Bei Heuwerbungsmaschinen mit mindestens zwei rotierenden Rechorganen, ist es vorteilhaft, wenn der Achsabstand zwischen letzteren veränderbar ausgebildet ist.

Es wäre auch möglich, dass die Zinken 48 teleskopartig in den durch den Werkzeugträgerring 49 gebildeten Raum zurückversetzbar ausgebildet sind.

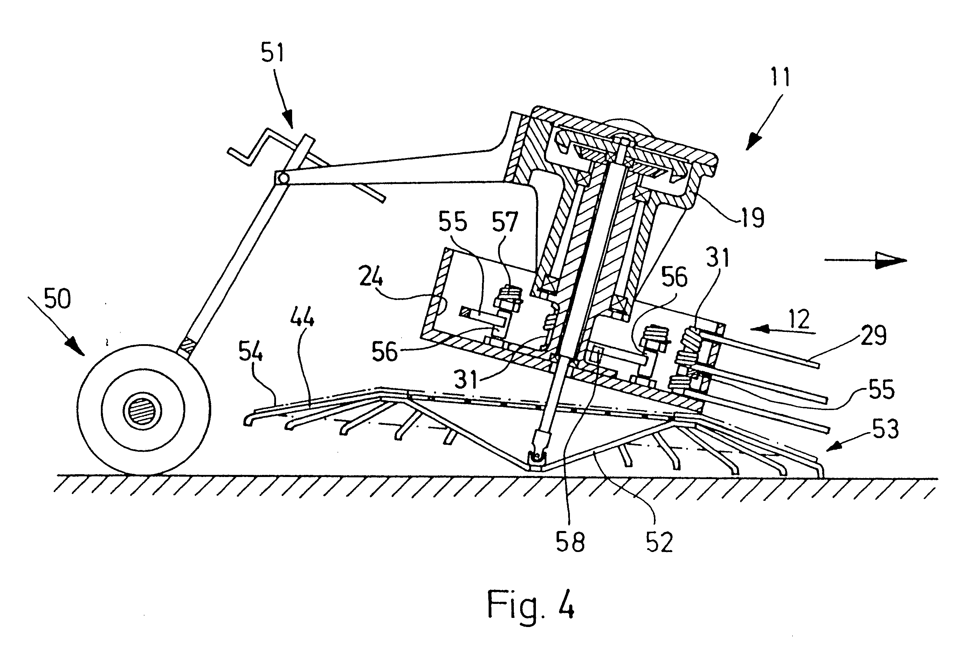

Fig. 4 zeigt die Heuwerbungsmaschine 11 mit einem nachlaufenden Rad 50 als Stützorgan. Dieses Stützrad 50 ist an der Rückseite der Heuwerbungsmaschine 11 an deren Gestell bzw. Antriebsgehäuse 19 und vorteilhaft jedem Rechorgan zugeordnet. Mit der Höhenverstellvorrichtung 51 kann die Anpassung des Ringkragens 13 bzw. der Rechzinken 44 die mit einer Nabe 52 ein Rechrad 53 bilden, am Boden eingestellt werden.

Eine derart rollende Abstützung könnte bei allen bisher beschriebenen Ausführungsformen eingesetzt werden. Das Rechrad 43 kann vorteilhaft im Bereich der Rechzinken 44 mit einem ringförmigen Band 54 abgedeckt sein, wodurch der Futtertransport begünstigt wird. Die Förderzinken 29 sind an Zinkenträgern 31 befestigt, die ihrerseits mittels Schwenkhebeln 55 mit einer vertikal gelagerten Schwenkbuchse 56 verbunden sind. Bei Rotation des Werkzeugträgers 12 in der Zettdrehzahl schwenken die Schwenkhebel 55 gegen die Wand 24 und bringen so die Förderzinken 29 in Arbeitsposition. Letztere greifen vorteilhaft im Bereich ihrer grössten Annäherung mit ihren äusseren Enden gegenseitig ineinander.

Reduziert sich die Drehzahl des Werkzeugträgers 12 erheblich, dann schwenken die Schwenkhebel 55 durch ein Antriebsmittel, z.B. Torsionsfedern 57, in ihre unwirksame Lage zurück. Diese Zinkenposition könnte auch dazu ausgenutzt werden, dass durch ihr leichtes Vorstehen am Werkzeugträger 12 das Wickeln des Futters beim Schwaden verhindert wird. Damit die Förderzinken 29 beim Zetten auch nach dem Ausschalten des Antriebes in ihrer Arbeitslage verharren, kann eine Einrastvorrichtung 58 vorgesehen werden, die die Schwenkhebel 55 vor dem Zurückdrehen sichert. Diese Einrastvorrichtung 58 kann bei Nichtbegrauch der Förderzinken 29 zentral gelöst werden. Ebenso ist es möglich, mit Hilfe einer weiteren Verriegelung die Förderzinken 29 in ihrer Ausserbetriebsstellung festzuhalten. Die Förderzinken 29 können als gerade, radial abstehende Finger oder entgegen ihrer Drehrichtung verlaufend gekrümmt ausgebildet sein.

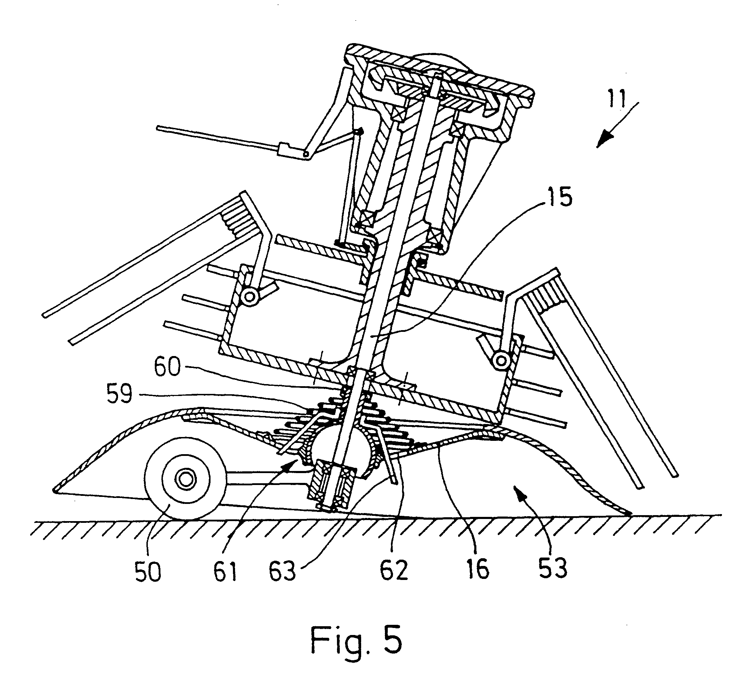

In Fig. 5 ist die Heuwerbungsmaschine 11 mit dem Unterschied eines anderen Fahrgestelles und einer Einrichtung zur verbesserten Bodenanpassung des Ringkragens 11 bzw. des Rechrades 53 dargestellt.

Das Stützrad 50 ist unter dem Ringkragen 13 an der Antriebswelle 15 und um diese frei schwenkbar und nachlaufend angeordnet.

Durch diese Bauart kann auch unter anderem das Wickeln des anfallenden Futters an der Achse des Stützrades 50 weitgehend verhindert werden. Der Ringkragen 13 wird mittels Federkraft gegen den Boden gedrückt, sodass die Futteraufnahme gewährleistet ist. Zu diesem Zwecke ist eine Druckfeder vorgesehen, die einerseits durch einen festen Ring 60 an der Antriebswelle 15 abgestützt ist und andererseits die Nabe 16 des Rechrades 53 beaufschlagt. Die Nabe 16 des Rechrades 53 besitzt ein Kugelgelenk 61, das mit der Antriebswelle 15 verbunden ist und die taumelnden Drehbewegungen des Rechrades aufnimmt. Die Nabe 16 des Rechrades 53 ist mit Durchtrittsöffnungen 62 für die mit der rotierenden Antriebswelle 15 verbundenen Mitnehmer 63 versehen. Bezüglich ihrer funktionellen Eigenschaften kann diese Ausführung auch bei den vorher beschriebenen Ausführungen eingesetzt werden.

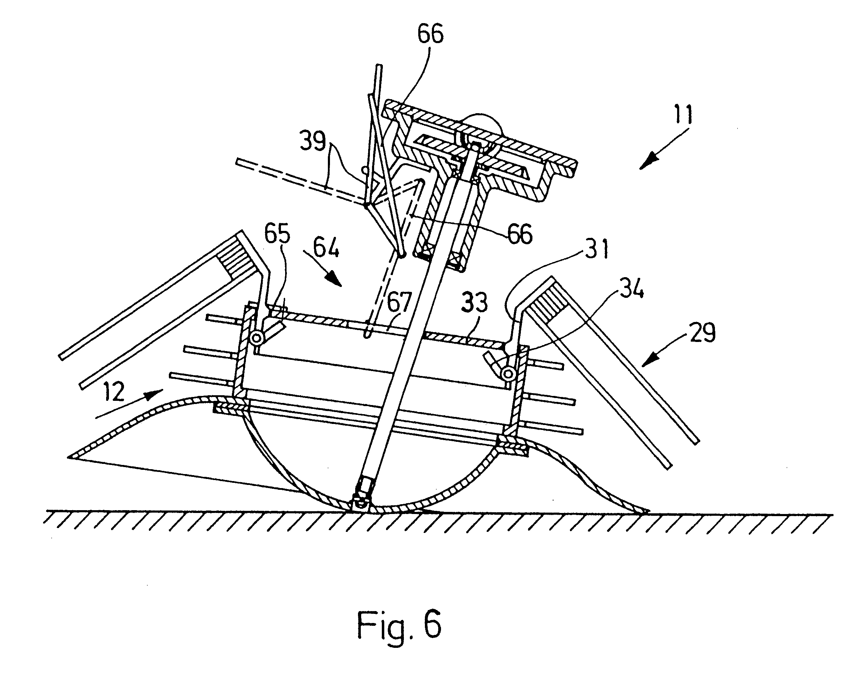

In Fig. 6 wird auf eine besonders einfache Ausführungsform der Heuwerbungsmaschine 11 hingewiesen. Mittels einer zentralen Betätigungsvorrichtung 64 werden die Zinkenträger 31 aus ihrer Ruhelage in die Arbeitsstellung versetzt und dort arretiert. Wie schon vorher veranschaulicht, werden durch einen angehobenen Teller 33 die Zinkenträger 31 in die Arbeitslage geschwenkt und gegen das Zurückschwenken mittels Tellersicherung 65 festgehalten. Letztere ist am Teller 33 angebaut und stützt sich auf dem Rand des Werkzeugträgers 12 ab.

Zum Anheben des Tellers wird ein Doppelhebel 39 benutzt, der über eine Zugstange 66 den Teller 33 verbindet. Da der Teller 33 mitrotiert, ist die Zugstange 66 an diesem lösbar angebracht. Bei Ausserbetriebnahme der Förderzinken 29 wird der Teller 33 auf die Hebel 34 abgesenkt, so dass die Zinkenträger 31 nach innen geschwenkt werden. Damit die Maschine in eine leicht nach vorn gerichtete Neigungslage versetzt werden kann, ist der Teller 33 mit einer konzentrischen Oeffnung 67 versehen.

**Patentansprüche**

1. Heuwerbungsmaschine (11) zum Schwadenziehen, Wenden und Zetten von geschnittenem Halmgut, mit zwei um stehende Achsen gegenläufig rotierend antreibbaren Rechkörpern, die an ihrer Unterseite ein zum Boden hin gerichtetes, elastisch verformbares Aufnahme- bzw. Transportorgan (13, 53) für das Halmgut aufweisen und die mit jeweils einem über den Aufnahmebzw. Transportorganen angeordneten, mit nach unten in den Wirkungsbereich der Aufnahme- bzw. Transportorgane sich erstreckenden, Förderzinken (29) aufweisenden, rotierend antreibbaren Werkzeugträger (12) versehen sind, wobei die durch die freien Enden der umlaufenden Förderzinken (29) gebildeten Rechkreise sich zwischen den Rechkörpern schneiden, dadurch gekennzeichnet, dass die die Förderzinken (29) aufweisenden Werkzeugträger (12) von den Aufnahme- bzw. Transportorganen (13, 53) getrennt und mit einer grösseren Drehzahl als letztere antreibbar sind.

2. Maschine nach Anspruch 1, dadurch gekennzeichnet, dass die Antriebswelle des Werkzeugträgers (12) in einem stationären Antriebsgehäuse (19) angeordnet und als Hohlachse (45) ausgebildet ist, die die Lagerung der mit dem Aufnahme- bzw. Transportorgan (13, 53) verbundenen Antriebswelle (15) bildet.

3. Maschine nach Anspruch 2, dadurch gekennzeichnet, dass zur Lagerung der Hohlachse (45) das Antriebsgehäuse (19) mit einem nach unten gerichteten Lagerhals versehen ist.

4. Maschine nach Anspruch 1 und 2, dadurch gekennzeichnet, dass das Aufnahme- bzw. Transportorgan (13, 53) mittels Gelenk (41) am unteren Ende der Antriebswelle (15) taumelbar befestigt ist.

5. Maschine nach Anspruch 1, 2 und 4, dadurch gekennzeichnet, dass das unterhalb des Aufnahme- bzw. Transportorgans (13, 53) angeordnete Abstützorgan (14) eine nach oben hin offene, kugelartige Kalottenform aufweist.

6. Maschine nach Anspruch 1, dadurch gekennzeichnet, dass die Förderzinken (29) an den am Werkzeugträger (12) um horizontale Achsen schwenkbar angeordneten Zinkenträgern (31) befestigt sind.

7. Maschine nach Anspruch 1 und 6, dadurch gekennzeichnet, dass die Zinkenträger (31) als erster Hebelarm eines an der Innenseite des Werkzeugträgers (12) angelenkten Doppelhebels ausgebildet sind und der zur Drehachse hin gerichtete zweite Hebelarm einer an der Antriebswelle (15) verschiebbar gelagerten Betätigungseinrichtung (33, 37) zur Inbetriebnahme bzw. Ausserbetriebnahme der Förderzinken (29) zugeordnet ist.

8. Maschine nach Anspruch 7, dadurch gekennzeichnet, dass das die Förderzinken (29) aufnehmende Ende der Zinkenträger (31), zu letzteren annähernd rechtwinklig angeordnet, nach unten abgekröpft ausgebildet ist.

9. Maschine nach den Ansprüchen 6 bis 8, dadurch gekennzeichnet, dass die Betätigungseinrichtung einen die Förderzinken (29) mittels Hebelgetriebe (37) parallel zur Stehachse verstell- und feststellbaren Teller (33) aufweist.

10. Maschine nach Anspruch 1, dadurch gekennzeichnet, dass das Aufnahme- bzw. Transportorgan (53) aus einem die Rechradnabe (52) bildenden Abstützorgan und mehreren von diesem radial und schräg zum Boden gerichteten Rechzinken (44) gebildet ist.

11. Maschine nach den Ansprüchen 1 und 10, dadurch gekennzeichnet, dass die Rechzinken (44) mit ihren freien Enden etwa rechtwinklig zum Boden hin abgekröpft ausgebildet sind.

12. Maschine nach den Ansprüchen 10 und 11, dadurch gekennzeichnet, dass die Rechzinken (44) zumindest annähernd über ihren Wirkbereich von einem Band (54) abgedeckt sind.

13. Maschine nach den Ansprüchen 1 und 6 bis 8, dadurch gekennzeichnet, dass die Förderzinken (29) unter der Wirkung der durch die Rotation des Werkzeugträgers (12) erzeugten Zentrifugalkraft in Arbeitsstellung und mittels einer Feder (57) selbsttätig in Ausserbetriebsstellung bringbar sind.

14. Maschine nach Anspruch 1, dadurch gekennzeichnet, dass die Förderzinken (29) in einer zwischen der Arbeits- und Ausserbetriebsstellung vorgesehenen Mittelstellung als Räumzinken arretierbar sind.

15. Maschine nach Anspruch 1, dadurch gekennzeichnet, dass der Drehantrieb der Werkzeugträger (12) abschaltbar ausgebildet ist.

16. Maschine nach Anspruch 1, dadurch gekennzeichnet, dass mindestens ein Stützrad (50) ausserhalb der Rechorgane am Maschinengestell befestigt ist.

17. Maschine nach Anspruch 16, dadurch gekennzeichnet, dass am Stützrad (50) zur Bodenanpassung des Aufnahme- bzw. Transportorgans (13,53) eine Verstellvorrichtung (51) vorgesehen ist.

18. Maschine nach Anspruch 1, dadurch gekennzeichnet, dass das Aufnahme- bzw. Transportorgan (13,53) taumelnd an der Antriebswelle (15) angeordnet ist.

19. Maschine nach Anspruch 18, dadurch gekennzeichnet dass das Aufnahme- bzw. Transportorgan (13,53) über ein Kugelgelenk (61) abgestützt und von einer Feder beaufschlagbar angeordnet ist, wobei das zu treibende Organ (13,53) über einen Mitnehmer (63) mit der Antriebswelle (15) gekuppelt ist.


## Claims

1. A hay-making machine (11) for windrowing, turning and tedding cut grass crops, having two rake members which can be driven in rotation in opposite directions about vertical axes and each comprise, at their under side and directed towards the ground, a resiliently deformable pick-up and conveyor member (13, 53) for the crop and which are each provided with an implement carrier (12), which can be driven in rotation and is disposed above the pick-up and conveyor members and which comprises conveying tines (29) extending downwards into the range of action of the pick-up and conveyor members, while the raking circles formed by the free ends of the rotating conveying tines (29) intersect between the rake members, characterised in that the implement carriers (12) comprising the conveying tines (29) can be driven separately from the pick-up and conveyor members (13, 53) and at a higher speed than the latter.

2. A machine as claimed in Claim 1, characterised in that the drive shaft of the implement carrier (12) is housed in a stationary drive casing (19) and is constructed in the form of a hollow shaft (45) which forms the bearing arrangement for the drive shaft (15) connected to the pick-up and conveyor member (13, 53).

3. A machine as claimed in Claim 2, characterised in that the drive casing (19) is provided with a downwardly directed bearing neck to mount the hollow shaft (45).

4. A machine as claimed in Claims 1 and 2, characterised in that the pick-up and conveyor member (13, 53) is mounted for wobbling on the lower end of the drive shaft (15) by means of an articulation (41).

5. A machine as claimed in Claims 1, 2 and 4, characterised in that the supporting member (14) disposed below the pick-up and conveyor member (13, 53) has an upwardly open spherical cap shape.

6. A machine as claimed in Claim 1, characterised in that the conveying tines (29) are secured to tine carriers (31) adapted for pivoting about horizontal axes on the implement carrier (12).

7. A machine as claimed in Claims 1 and 6, characterised in that the tine carriers (31) are constructed in the form of a first lever arm of a double lever articulated on the inside of the implement carrier (12) and the second lever arm, directed towards the axis of rotation, is associated with an actuating device (33, 37) mounted for displacement on the drive shaft (15) for bringing the conveying times (29) into or out of operation.

8. A machine as claimed in Claim 7, characterised in that the end of the tine carrier (31) which receives the conveying tines (29) is disposed substantially at right angles to the latter and is bent downwards.

9. A machine as claimed in Claims 6 to 8, characterised in that the actuating device comprises a plate (33) which can adjust and locate the conveying tines (29) parallel to the vertical axis by means of a lever transmission (37).

10. A machine as claimed in Claim 1, characterised in that the pick-up and conveyor member (53) is formed from a supporting member forming a rake-wheel hub (52) and a plurality of rake tines (44) directed radially away from this and obliquely towards the ground.

11. A machine as claimed in Claims 1 and 10, characterised in that the free ends of the rake tines (44) are bent down towards the ground substantially at right angles.

12. A machine as claimed in Claims 10 and 11, characterised in that the rake tines (44) are covered by a band (54) at least substantially over their range of action.

13. A machine as claimed in Claims 1 and 6 to 8, characterised in that the conveying tines (29) can be brought into the working position under the action of the centrifugal force produced by the rotation of the implement carrier (12) and be brought automatically back into the inoperative position by means of a spring (57).

14. A machine as claimed in Claim 1, characterised in that the conveying tines (29) can be locked in a mid-position, provided between the working position and the inoperative position, as clearance tines.

15. A machine as claimed in Claim 1, characterised in that the rotary drive of the implement carrier (12) is adapted for switching off.

16. A machine as claimed in Claim 1, characterised in that as least one supporting wheel (50) is secured to the machine frame outside the rake members.

17. A machine as claimed in Claim 16, characterised in that an adjusting device (51) is provided on the supporting wheel (50) to adapt the pick-up and conveyor member (13, 53) to the ground.

18. A machine as claimed in Claim 1, characterised in that the pick-up and conveyor member (13, 53) is adapted for wobbling on the drive shaft (15).

19. A machine as claimed in Claim 18, characterised in that the pick-up and conveyor member (13, 53) is supported via a ball-and-socket joint (61) and is adapted to be acted upon by a spring, the member (13, 53) to be driven being coupled to the drive shaft (15) through an entrainment means (63).

## Revendications

1. Machine de fenaison (11) pour andainer, retourner et épandre des tiges coupées, munie de deux corps de râteau pouvant être entraînés en rotation en sens opposé autour d'axes verticaux, qui présentent à leur côté inférieur, pour les tiges, un organe ramasseur ou transporteur (13, 53) dirigé vers le sol, déformable élastiquement et qui sont chacun munis d'un porte-outils (12) pouvant être entraîné en rotation, disposé au-dessus des organes ramasseurs ou transporteurs, présentant des dents transporteuses (29) s'étendant vers le bas dans la région des organes ramasseurs ou transporteurs, les cercles de ratissage formés par les extrémités libres des dents transporteuses (29) en rotation se coupant entre les corps de râteau, caractérisée par le fait que les porte-outils (12) présentant les dents transporteuses (29) sont séparés des organes ramasseurs ou transporteurs (13, 53) et peuvent être entraînés à une plus grande vitesse de rotation que ces derniers.

2. Machine selon la revendication 1, caractérisée par le fait que l'arbre d'entraînement du porte-outils (12) est disposé dans un carter d'entraînement fixe (19) et est conçu sous forme d'axe creux (45) qui forme le montage de l'arbre d'entraînement (15) relié à l'organe ramasseur ou transporteur (13, 53).

3. Machine selon la revendication 2, caractérisée en ce que pour le montage de l'axe creux (45), le carter d'entraînement (19) est muni d'un col de palier dirigé vers le bas.

4. Machine selon les revendications 1 et 2, caractérisée par le fait que l'organe ramasseur ou transporteur (13, 53) est fixé de manière à pouvoir osciller, au moyen d'une articulation (41), à l'extrémité inférieure de l'arbre d'entraînement (15).

5. Machine selon les revendications 1, 2 et 4, caractérisée par le fait que l'organe de soutien (14) disposé en dessous de l'organe ramasseur ou transporteur (13,53) présente une forme de calotte sphérique ouverte vers le haut.

6. Machine selon la revendication 1, caractérisée par le fait que les dents transporteuses (29) sont fixées aux porte-dents (31) disposées sur le porte-outils (12) de manière à pouvoir pivoter autour d'axes horizontaux.

7. Machine selon les revendications 1 et 6, caractérisée par le fait que les porte-dents (31) sont conçus comme premier bras de levier d'un levier double articulé au côté intérieur du porte-outils et que le deuxième bras de levier, dirigé vers l'axe de rotation, est adjoint à un dispositif d'actionnement (33, 37) monté de manière à pouvoir coulisser sur l'arbre d'entraînement (15), pour la mise en service ou la mise hors service des dents transporteuses (29).

8. Machine selon la revendication 7, caractérisée par le fait que l'extrémité des porte-dents (31) qui reçoit les dents transporteuses (29) est disposée à peu près perpendiculairement à celui-ci et coudée vers le bas.

9. Machine selon les revendications 6 à 8, caractérisée par le fait que le dispositif d'actionnement présente un plateau (33) pouvant modifier et fixer le réglage des dents transporteuses (29) au moyen d'un mécanisme à leviers (37), parallèlement à l'axe vertical.

10. Machine selon la revendication 1, caractérisée par le fait que l'organe ramasseur ou transporteur (53) est formé d'un organe de soutien formant le moyeu (52) de la roue de râteau et de plusieurs dents de râteau (44) partant radialement de cet organe et dirigées obliquement vers le sol.

11. Machine selon les revendications 1 et 10, caractérisée par le fait que les dents de râteau (44), par leurs extrémités libres, sont sous forme coudée à peu près à angle droit vers le sol.

12. Machine selon les revendications 10 et 11, caractérisé par le fait que les dents de râteau (44) sont recouvertes, a moins à peu près sur leur région d'action, par une bande (54).

13. Machine selon les revendications 1 et 6 à 8 caractérisée par le fait que les dents transporteuses (29 peuvent être amenées en position de travail sous l'effet de la force centrifuge engendrée par la rotation du porte-outils (12) et être amenées automatiquement en position hors service au moyen d'un ressort (57).

14. Machine selon la revendication 1 caractérisée par le fait que les dents transporteuses (29) peuvent être arrêtées, en tant que dents de dégagement, dans une position moyenne prévue entre la position de travail et la position hors service.

15. Machine selon la revendication 1 caractérisée par le fait que l'entraînement de rotation des porte-outils (12) est conçu pour pouvoir être débranché.

16. Machine selon la revendication 1, caractérisée par le fait qu'au moins une roue de soutien (50) est fixée au bâti à l'extérieur des organes de ratissage.

17. Machine selon la revendication 16, caractérisée par le fait que sur la roue de soutien (50) est prévu pour l'adaptation de l'organe ramasseur ou transporteur (13, 53) au sol, un dispositif de réglage (51).

18. Machine selon la revendication 1, caractérisée par le fait que l'organe ramasseur ou transporteur (13, 53) est disposé de façon oscillante sur l'arbre d'entraînement (15).

19. Machine selon la revendication 18, caractérisée par le fait que l'organe ramasseur ou transporteur (13, 53) est soutenu par l'intermédiaire d'un joint à rotule (61) et disposé de manière à pouvoir subir l'action d'un ressort, l'organe à entraîner (13, 53) étant accouplé à l'arbre d'entraînement (15) par l'intermédiaire d'un entraîneur (63).

Fig. 1

Fig. 2

0 088 214

Fig. 3

Fig. 4

0 088 214

Fig. 5

Fig. 6

0 088 214